# EUROPEAN PATENT APPLICATION

(11) **EP 3 056 876 A1**
(43) Date of publication of application: **17.08.2016**
(21) Application number: 16154578.5
(22) Date of filing: 05.02.2016
(51) Int. Cl.: G01F 23/284, G01S 7/03, H04B 1/44

(54) **ELECTRONIC LEVEL GAUGE HAVING IMPROVED NOISE REJECTION AND POWER TRANSMISSION**

(30) Priority: 13.02.2015 US 201514622371
(71) Applicant: Honeywell International Inc., Morris Plains, NJ 07950 (US)
(72) Inventor: NUSSEIBEH, Fouad, Morris Plains, NJ 07950 (US)
(74) Representative: Houghton, Mark Phillip

(57) **Abstract**

An electronic level gauge (ELG) (140) for measuring a level (122) of a material (120) in a tank (110). The ELG includes a transmitter (210), an antenna (150) and a receiver (220). A first switch (230) is coupled between the transmitter and the antenna. The first switch couples and decouples the transmitter from the antenna. A second switch (240) is coupled between the receiver and the antenna. The second switch couples and decouples the receiver from the antenna. A switch controller (256) is coupled to the first switch and the second switch. The switch controller provides control signals for controlling the first switch to selectively couple the transmitter to the antenna when electrical pulses are being transmitted and for controlling the second switch to selectively couple the receiver to the antenna when reflected electromagnetic signals are being received from the surface of the material.

Preferably, the first switch couples the antenna to a first terminator (250) when the transmitter is decoupled and the second switch couples the antenna to a second terminator (252) when the receiver is decoupled. The terminators prevent unwanted signal reflections, which produce interference that causes signal loss and noise.

## Description

### FIELD

Disclosed embodiments relate to electronic level gauges (e.g., guided radar, free-space radar) for measuring the level of a material in a tank or in a container.

### BACKGROUND

A radar level gauge is commonly used in industry as part of a guided wave radar (GWR) and /or non-contact radar (NCR) system to measure the amount (e.g., level) of material (liquid or bulk solid (e.g., powder)) in a tank or a storage container. A radar level gauge provides continuous level (volume) measurement of high reliability at a generally reasonable price. The reliability is obtained due to lack of moving parts and insensitivity of the measurements to changes in process pressure, temperature, and density of measured material.

The radar level gauge for guided or free-space radar is mounted on top of the tank and measures the distance from a reference point, usually a mounting flange at the top of the antenna to the surface of the product material in the tank using reflection of the measuring signal from the surface of the product material. The product level value is obtained by subtracting the measured distance from a total height of the tank.

The NCR level gauge has a transmitter for generating electrical pulses at a carrier frequency and an antenna that conveys the electromagnetic pulses towards a surface of the material. A reflected electromagnetic signal originates from the surface of the material due to the electromagnetic pulses. A receiver receives the reflected electromagnetic signal from the antenna.

### SUMMARY

This Summary is provided to introduce a brief selection of disclosed concepts in a simplified form that are further described below in the Detailed Description including the drawings provided. This Summary is not intended to limit the claimed subject matter's scope.

Disclosed embodiments recognize because the transmitter and receiver of an electronic level gauge (ELG) for measuring a level of a material in a tank share a common antenna, power loss and attenuation can occur during transmission of the electrical pulses due to unwanted signal reflections and impedance mismatches. At the receiver, increased noise can occur due to unwanted signal reflections and impedance mismatches.

Disclosed embodiments include ELGs for measuring a level of a material in a tank that include two switches for terminating the undesired part of the signal from reaching the transmitter/receiver. An antenna is coupled to an output of the transmitter for receiving the electrical pulses from the transmitter and for conveying electromagnetic pulses towards a surface of the material and for receiving a reflected electromagnetic signal from the surface of the material responsive to the electromagnetic pulses. A receiver is coupled to the antenna for receiving the reflected electromagnetic signal from the surface of the material. A first switch is coupled between the transmitter and the antenna. In some embodiments a transceiver provides both the transmitter and receiver for the ELG, so that when the description refers to a transmitter and receiver it is understood the transmitter and receiver can be provided as a single transceiver, or be embodied as separate transmitter and receiver blocks.

The first switch is for coupling or decoupling (selectively coupling) the transmitter from the antenna. A second switch is coupled between the receiver and the antenna. The second switch is for coupling or decoupling (selectively coupling) the receiver from the antenna. A switch controller is coupled to the first switch and the second switch. The switch controller provides control signals for controlling the first switch to selectively couple the transmitter to the antenna when the electrical pulses are being transmitted and for controlling the second switch to selectively couple the receiver to the antenna when the reflected electromagnetic signal is being received from the surface.

One disclosed embodiment comprises a method of operating an ELG for measuring a level of a material in a tank. The method includes providing a transmitter for generating electrical pulses and an antenna coupled to an output of the transmitter for receiving the electrical pulses and for conveying electromagnetic pulses towards a surface of the material and for receiving a reflected electromagnetic signal from the surface of the material responsive to electromagnetic pulses. The method further includes providing a receiver coupled to the antenna for receiving the reflected electromagnetic signal from the surface of the material. A switch controller detects transmission of the electromagnetic pulses from the transmitter. A first switch is triggered to decouple the transmitter from the antenna and to couple the antenna to a first terminator. A second switch is triggered to couple the receiver to the antenna and to decouple the antenna from a second terminator.

### BRIEF DESCRIPTION OF THE DRAWINGS

FIG. 1 is a block diagram of an example ELG system mounted to a tank for measuring the level of a material in the tank, according to an example embodiment.
FIG. 2 is a schematic diagram of an ELG circuit with the transmitter coupled to the antenna, according to an example embodiment.
FIG. 3 is a schematic diagram of the ELG circuit with the receiver coupled to the antenna, according to an example embodiment.
FIG. 4 is a flow chart that shows steps in an example method of operating an ELG for measuring a level of a material in a tank, according to an example embodiment.

### DETAILED DESCRIPTION

Disclosed embodiments are described with reference to the attached figures, wherein like reference numerals, are used throughout the figures to designate similar or equivalent elements. The figures are not drawn to scale and they are provided merely to illustrate aspects disclosed herein. Several disclosed aspects are described below with reference to example applications for illustration. It should be understood that numerous specific details, relationships, and methods are set forth to provide a full understanding of the embodiments disclosed herein.

One having ordinary skill in the relevant art, however, will readily recognize that the disclosed embodiments can be practiced without one or more of the specific details or with other methods. In other instances, well-known structures or operations are not shown in detail to avoid obscuring aspects disclosed herein. Disclosed embodiments are not limited by the illustrated ordering of acts or events, as some acts may occur in different orders and/or concurrently with other acts or events. Furthermore, not all illustrated acts or events are required to implement a methodology in accordance with this Disclosure.

The terms "coupled to" or "couples with" (and the like) as used herein without further qualification are intended to describe either an indirect or direct electrical connection. Thus, if a first device "couples" to a second device, that connection can be through a direct electrical connection where there are only parasitics in the pathway, or through an indirect electrical connection via intervening items including other devices and connections. For indirect coupling, the intervening item generally does not modify the information of a signal but may adjust its current level, voltage level, and/or power level.

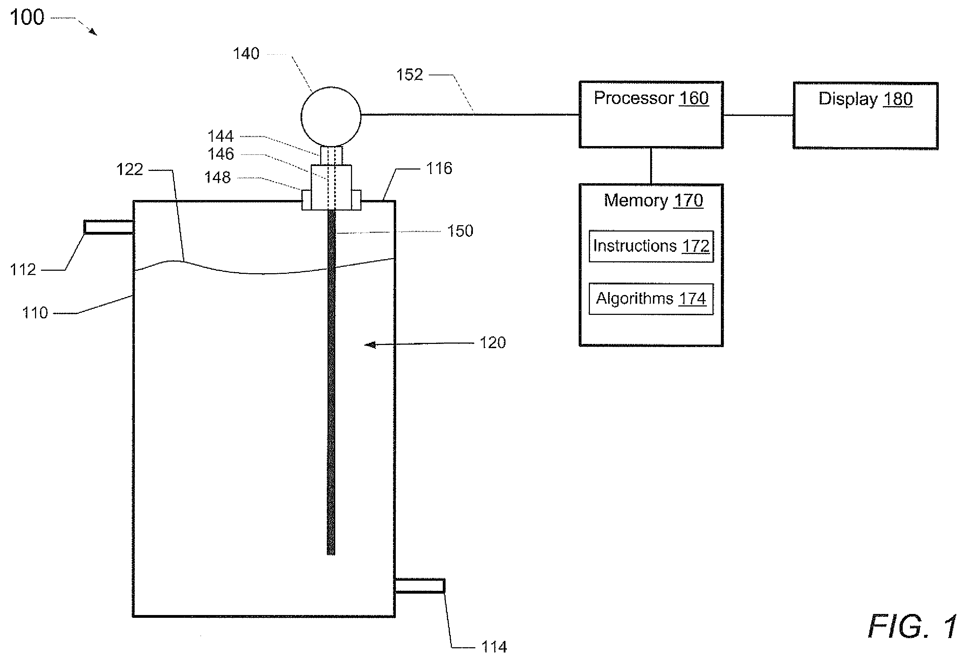

FIG. 1 illustrates an example ELG system 100. ELG system 100 can be used in a variety of manufacturing plants that handle and process a tangible material. In one embodiment, ELG system 100 can be used in a petroleum refinery. In another embodiment, ELG system 100 can be used in a grain processing and shipping facility. ELG system 100 includes a tank 110 that contains a liquid or other material 120 (liquid or bulk solid (e.g., powder)). The tank has an inlet 112 and an outlet 114. The liquid or other material 120 fills the tank 110 to an upper level or surface 122. An ELG 140 such as a radar gauge is mounted to the top 116 of tank 110.

A radar gauge provides continuous level (volume) measurement for the liquid or other material 120 of high reliability at a generally reasonable price. The reliability is obtained due to lack of moving parts and insensitivity of the measurements to changes in process pressure, temperature, and density of measured material. The radar level gauge for guided or free-space radar is mounted on the top 116 of the tank 110 and measures the distance from a reference point, usually a mounting flange at the top of the antenna to the surface of the product material in the tank using reflection of the measuring signal from the level or surface 122 of the liquid or other material 120.

ELG 140 as shown includes coaxial connector 144, feed-through 146, and flange 148 that couple the ELG 140 to an antenna (or probe) 150 which is inserted over a tank aperture (not shown) in the top 116 of the tank 110. As shown, antenna 150 extends well into the liquid or other material 120 in the tank 110, such as to implemented guided wave radar (GWR). However, the antenna 150 may also be used in a non-contact manner. ELG 140 is shown coupled to processor 160 via an electrical cable 152. Coupling between ELG 140 and processor 160 may also be accomplished wirelessly.

ELG 140 can transmit electrical signals representative of the distance from the top 116 of the tank 110 to the level of liquid or other material 120 in the tank 110 to the processor 160 (e.g., digital signal processor (DSP), microprocessor or microcontroller unit (MCU)). Memory 170 is coupled to processor 160. Memory 170 stores instructions 172 and algorithms 174. Processor 160 can execute instructions 172 and/or algorithms 174 causing processor 160 to perform any one or more of the methods, processes, operations, applications, or methodologies described herein. For example, after digital conversion processor 160 can receive electrical signals resulting from the reflected electromagnetic signals received by the antenna 150 of the ELG 140 representative of the measured distance from the top of tank to the level of liquid or other material 120, and using a stored total height of the tank 110 calculate the level by subtracting the measured distance from the total height of the tank 110. Processor 160 is further coupled to a display 180 for showing the calculated level to an operator.

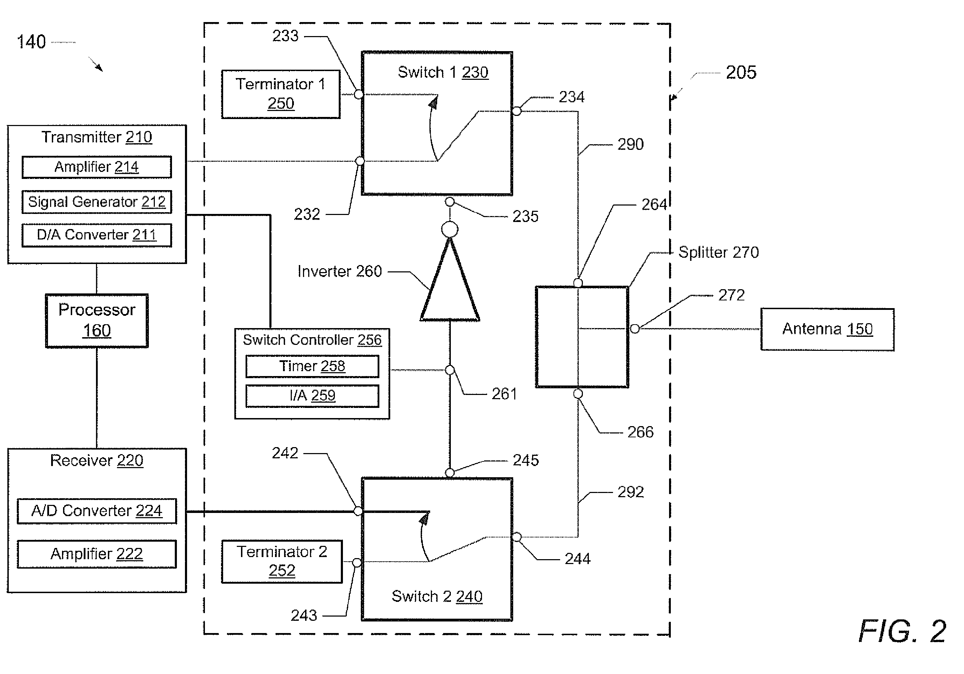

FIG. 2 illustrates example electrical schematic diagrams of ELG 140 and an example front end circuit 205 positioned between the transmitter 210 and receiver 220 of the ELG 140 and the antenna 150. Although not shown, a transceiver can provide both the transmitter 210 and receiver 220. ELG 140 includes a transmitter 210 for generating electrical pulses and a receiver 220 for receiving a reflected electromagnetic signal from the surface of the liquid or other material 120 responsive to electromagnetic pulses. Transmitter 210 includes a digital-to-analog (D/A) converter 211, signal generator 212 and an amplifier 214. Signal generator 212 generates electrical pulses that are amplified by amplifier 214. Transmitter 210 has an input coupled to an output of the processor 160.

Front end circuit 205 includes switch 1 230 and switch 2 240. Transmitter 210 is also coupled to switch 1 230. In one embodiment, switch 1 230 is a microwave single pole double throw switch. The switches may also comprise metal-oxide-semiconductor field-effect transistor (MOSFET) switches, or other solid state switches provided they are fast enough for RF applications. Switch 1 230 has signal terminals 232, 233, 234 and a control terminal 235. In one embodiment, front end circuit 205 is physically mounted to a printed circuit board with component interconnections accomplished by printed circuit lines as is known in the art. Transmitter 210 is coupled to signal terminal 232.

Front end circuit 205 includes terminator 1 250 and terminator 2 252. Terminator 1 250 is coupled to signal terminal 233. Terminator 1 250 is a passive or active device that is coupled to an end of a circuit in order to absorb signals. Terminator 1 250 prevents unwanted signal reflections due to signals reflected by the splitter or impedance mismatches, which can produce interference that causes signal loss and noise. The impedance of terminator 1 250 is matched to the circuit it is connected with. In one embodiment, terminator 1 250 is a passive terminator that can include resistors, inductors, capacitors and transmission lines or a combination of resistors, inductors, capacitors and transmission lines. In one embodiment, terminator 1 250 is an active terminator.

Front end circuit 205 includes a power splitter 270 that has terminals 264, 266 and 272. Terminal 264 of power splitter 270 is coupled to terminal 234 of switch 1 230 via a circuit line 290. Terminal 272 of power splitter 270 is coupled to antenna 150. Power splitter 270 couples both transmitter 210 and receiver 220 to antenna 150.

Receiver 220 includes an amplifier 222 and an analog to digital (A/D) converter 224. Amplifier 222 amplifies received reflected electromagnetic signals and A/D converter 224 converts the amplified reflected electromagnetic signals into a digital signal. Receiver 220 has an output coupled to an input of the processor 160 and an output coupled to signal terminal 242 of the switch 2 240. In one embodiment, switch 2 240 is a microwave single pole double throw switch. Switch 2 240 has signal terminals 242, 243, 244 as well as a control terminal 245.

A terminator 2 252 is coupled to signal terminal 243. Terminator 2 252 is a passive or active device that prevents unwanted signal reflections due to impedance mismatches, which can produce interference that causes signal loss and noise. The impedance of terminator 2 252 is matched to the circuit it is connected with. In one embodiment, terminator 2 252 is a passive terminator that can include resistors, inductors, capacitors and transmission lines or a combination of resistors, inductors, capacitors and transmission lines. In one embodiment, terminator 2 252 is an active terminator. Terminal 266 of power splitter 270 is coupled to terminal 244 of switch 2 240 via a circuit line 292.

Front end circuit 205 further includes a switch controller 256 that is coupled to transmitter 210 and to a node 261. In one embodiment, switch controller 256 is a microcontroller. However, in another embodiment, processor 160 of ELG 140 may also provide the functions provided by switch controller 256. Node 261 is coupled to terminal 245 of switch 2 240 and to an input of inverter 260. The output of inverter 260 is coupled to terminal 235 of switch 1 230. Switch controller 256 has a timer 258. Timer 258 can be started to track a pre-determined time period for switch 1 230 to be coupled and decoupled from the transmitter 210 and for switch 2 240 to be coupled and decoupled from the receiver 220. Switch controller 256 provides control signals typically to the control terminals (e.g., gates) of the switches for controlling switch 1 230 to selectively couple the transmitter 220 to the antenna 150 when the electrical pulses are being transmitted and for controlling the switch 2 240 to selectively couple the receiver 220 to the antenna 150 when the reflected electromagnetic signal is being received from the surface 122 of the liquid or other material 120 in tank 110.

Antenna 150 is coupled to an output of the transmitter 210 for receiving the electrical pulses and for conveying electromagnetic pulses towards a surface 122 of the liquid or other material 120 and for receiving a reflected electromagnetic signal from the surface of the material responsive to electromagnetic pulses. The receiver 220 is coupled to the antenna 150 for receiving the reflected electromagnetic signal from the surface of the material. Switch 1 230 is coupled between the transmitter 210 and the antenna 150. Switch 1 230 couples and decouples the transmitter 210 from the antenna 150.

There are some differences in the design of the antenna 150 depending upon the type of ELG. In the case of free-space (non-contact) radar transmitters, the antenna 150 extends into the tank 110 by only a relatively short distance so as to not contact the material in the tank 110. The measuring signal is propagated from the antenna towards the measured material through free-space (air or other gas in the tank). In the case of guided waver radar (GWR), the antenna 150 (waveguide) extends essentially all the way to the bottom of the tank 110, or a portion of the tank (if only a portion of the tank 110 needs to be measured). The measurement signal propagates along the antenna 150 (waveguide) to the liquid or other material 120 and then back to the ELG.

Switch 2 240 is coupled between the receiver 220 and the antenna 150. Switch 2 240 couples and decouples the receiver 220 from the antenna 150. Switch controller 256 is coupled to switch 1 230 and to switch 2 240. Switch controller 256 provides control signals or trigger signals for controlling switch 1 230 to selectively couple the transmitter 210 to the antenna 150 when the electrical pulses are being transmitted and for controlling switch 2 240 to selectively couple the receiver 220 to the antenna 150 when the reflected electromagnetic signal is being received from the surface 122. Inverter 260 causes switch 1 230 and switch 2 240 to be switched oppositely.

In FIG.2, switch 1 230 is shown coupling the transmitter 210 to the antenna 150 and switch 2 240 is shown coupling the antenna, 150 to terminator 2 252. Terminator 2 252 reduces reflected signals on circuit line 292. The connection of terminator 2 252 results in a lower insertion loss by power splitter 270 and increased power transmission from transmitter 210 to antenna 150.

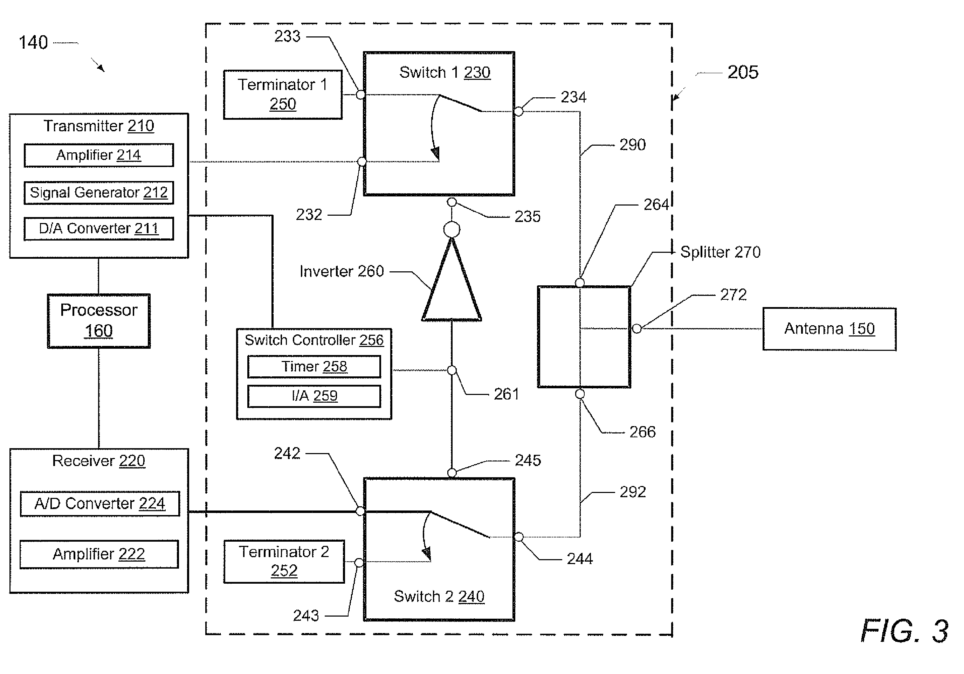

Referring to FIG. 3, front end circuit 205 is shown with switch 1 230 and switch 2 240 switched such that switch 1 230 couples the receiver 220 to the antenna, 150 and switch 2 240 couples the antenna 150 to terminator 1 250. Terminator 1 250 reduces reflected signals on circuit line 290. The connection of terminator 1 250 results in lower noise for signals received by receiver 220.

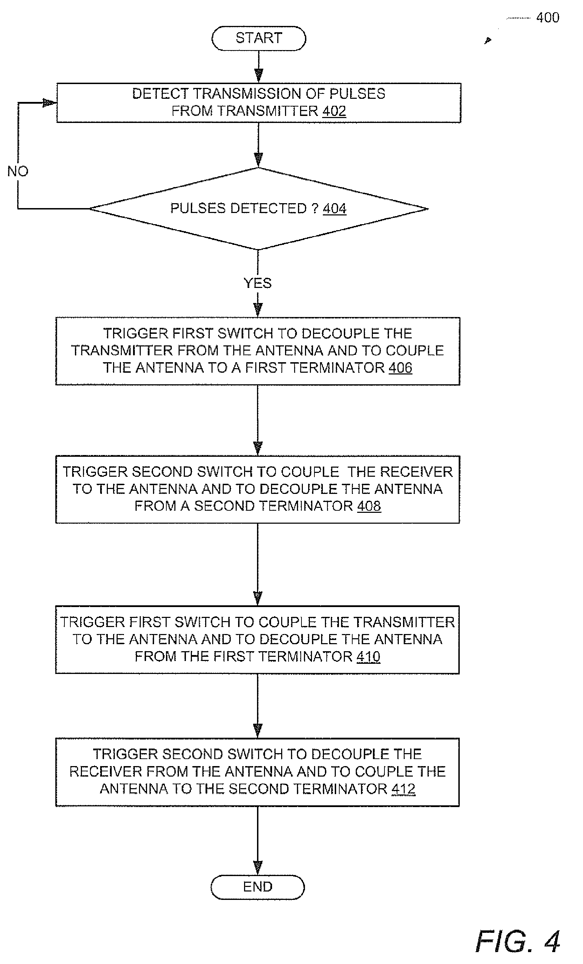

FIG. 4 is a flow chart showing steps in an example method 400 of operating an ELG system 100 for measuring a level of a liquid or other material 120 in a tank 110. Method 400 can be implemented via a processor executing instructions and/or algorithms (I/A) 259 by switch controller 256. Method 400 begins at the start block and proceeds to block 402 where switch controller 256 detects if transmitter 210 is transmitting electromagnetic pulses. At decision block 404, switch controller 256 determines if any electromagnetic pulses from the transmitter 210 have been detected. In one embodiment, switch 1 230 and switch 2 240 can be synchronized with the trigger signals generated by switch controller 256 by delaying the transmission trigger signal. In response to no electromagnetic pulses being detected, switch controller 256 continues to detect electromagnetic pulses at block 402. In response to electromagnetic pulses being detected, switch controller 256 triggers switch 1 230 via inverter 260 and control terminal 235 to decouple the transmitter 210 from the antenna 150 and to couple the antenna 150 to terminator 1 250 (block 406). Switch controller 256 triggers switch 2 240 via control terminal 245 to couple the receiver 220 to the antenna 150 and to decouple the antenna 150 from terminator 2 252 (block 408).

Switch controller 256 generates two different trigger signals with very low jitter and at two different but close frequencies. One trigger signal is used when electrical pulses are being transmitted from transmitter 210 and the other trigger signal is used when receiver 220 is receiving the reflected electromagnetic signal. In one particular embodiment, the transmitting trigger signal can be at 4 MHZ and the receiving trigger signal at 3.999993 MHZ. In this particular embodiment the trigger signals are approximately 7 Hz apart.

Switch controller 256 triggers switch 1 230 via inverter 260 and control terminal 235 to couple the transmitter 210 to the antenna 150 and to decouple the antenna 150 from terminator 1 250 (block 410). Switch controller 256 triggers switch 2 240 via control terminal 245 to decouple the receiver 220 from the antenna 150 and to couple the antenna 150 to terminator 2 252 (block 412). Method 400 then ends.

While various disclosed embodiments have been described above, it should be understood that they have been presented by way of example only, and not as a limitation. Numerous changes to the disclosed embodiments can be made in accordance with the Disclosure herein without departing from the spirit or scope of this Disclosure. Thus, the breadth and scope of this Disclosure should not be limited by any of the above-described embodiments. Rather, the scope of this Disclosure should be defined in accordance with the following claims and their equivalents.

Although disclosed embodiments have been illustrated and described with respect to one or more implementations, equivalent alterations and modifications will occur to others skilled in the art upon the reading and understanding of this specification and the annexed drawings. While a particular feature may have been disclosed with respect to only one of several implementations, such a feature may be combined with one or more other features of the other implementations as may be desired and advantageous for any given or particular application.

## Claims

1. An electronic level gauge (ELG) (140) for measuring a level (122) of a material (120) in a tank (110), said ELG comprising:
a transmitter (210) for generating electrical pulses;
an antenna (150) coupled to an output of said transmitter for receiving said electrical pulses and for conveying electromagnetic pulses towards a surface of said material and for receiving a reflected electromagnetic signal from said surface of said material responsive to said electromagnetic pulses;
a receiver (220) coupled to said antenna for receiving said reflected electromagnetic signal from said surface of said material;
a first switch (230) coupled between said transmitter and said antenna, said first switch for coupling and decoupling said transmitter from said antenna;
a second switch (240) coupled between said receiver and said antenna, said second switch for coupling and decoupling said receiver from said antenna, and
a switch controller (256) coupled to said first switch and to said second switch, said switch controller providing control signals for controlling said first switch to selectively couple said transmitter to said antenna when said electrical pulses are being transmitted and for controlling said second switch to selectively couple said receiver to said antenna when said reflected electromagnetic signal is being received from said surface.

2. The ELG of claim 1, further comprising:
a first terminator (250) coupled to said first switch and to said antenna when said transmitter is decoupled from said antenna; and
a second terminator (252) coupled to said second switch and to said antenna when said receiver is decoupled from said antenna.

3. The ELG of claim 2, further comprising a first circuit line (290) coupled between said first switch and said antenna and a second circuit line (292) coupled between said second switch and said antenna, wherein said first and second terminators reduce reflected signals on said first and said second circuit lines.

4. The ELG of claim 2, further comprising:
a power splitter (270) having a first terminal coupled to said antenna, a second terminal coupled to said first switch and a third terminal connected to said second switch.

5. The ELG of claim 1, further comprising:
an inverter (260) coupled between said first switch and said second switch having an input for receiving said control signals that is coupled to an input of one of said first switch and said second switch and an output coupled to an input of the other of said first switch and said second switch.

6. The ELG of claim 1, wherein said switch controller detects transmission of said electrical pulses from said transmitter and in response to detection of said transmission of said electrical pulses, triggers said first and second switches to operate.

7. The ELG of claim 6, wherein said switch controller generates a first trigger signal at a first frequency and a second trigger signal at a second frequency.

8. The ELG of claim 7, wherein said first trigger signal is generated when said transmitter is transmitting said electrical pulses and said second trigger signal is generated when said receiver is receiving said reflected electromagnetic signal from said surface of said material.

9. The ELG of claim 1, further comprising:
an amplifier (222) coupled to said receiver, said amplifier amplifying said reflected electromagnetic signal;
an analog to digital converter (224) coupled to said amplifier, said analog to digital converter converting said reflected electromagnetic signal to a digital signal.

10. The ELG of claim 1, wherein said transmitter further comprises:
a signal generator (212); and
an amplifier (214) coupled to said signal generator.

11. A method of operating an electronic level gauge (ELG) (140) for measuring a level (122) of a material (120) in a tank (110), the method comprising:
providing a transmitter (210) for generating electrical pulses, an antenna (150) coupled to an output of said transmitter for receiving said electrical pulses and for conveying electromagnetic pulses towards a surface of said material and for receiving a reflected electromagnetic signal from said surface of said material responsive to said electromagnetic pulses and a receiver (220) coupled to said antenna for receiving said reflected electromagnetic signal from said surface of said material;
detecting, via a switch controller (256), transmission of said electromagnetic pulses from said transmitter;
triggering a first switch (230) to decouple said transmitter from said antenna and to couple said antenna to a first terminator (250); and
triggering a second switch (240) to couple said receiver to said antenna and to decouple said antenna from a second terminator (252).

12. The method of claim 11, further comprising:
triggering said first switch to couple said transmitter to said antenna and to decouple said antenna from said first terminator, and
triggering said second switch to decouple said receiver from said antenna and to couple said antenna to said second terminator.
